Europäisches Patentamt

European Patent Office

Office européen des brevets

(11) Publication number: **0 110 771**
**B1**

# EUROPEAN PATENT SPECIFICATION

(45) Date of publication of patent specification: **30.03.88**

(51) Int. Cl.⁴: **G 01 N 27/28, B 01 L 3/00**

(21) Application number: **83402242.8**

(22) Date of filing: **22.11.83**

(54) **Capillary transport device having means for increasing the viscosity of the transported liquid.**

(30) Priority: **22.11.82 US 443785**

(43) Date of publication of application:
**13.06.84 Bulletin 84/24**

(45) Publication of the grant of the patent:
**30.03.88 Bulletin 88/13**

(84) Designated Contracting States:
**CH DE FR GB LI**

(56) References cited:
**EP-A-0 023 156**
**US-A-4 053 381**
**US-A-4 302 313**

(73) Proprietor: **EASTMAN KODAK COMPANY**
**343 State Street**
**Rochester New York 14650 (US)**

(72) Inventor: **Columbus, Richard Lewis**
**230 Ambassador Drive**
**Rochester New York 14610 (US)**

(74) Representative: **Buff, Michel et al**
**Kodak-Pathé Département des Brevets et**
**Licences CRT Centre de Recherches et de**
**Technologie Zone Industrielle**
**F-71102 Chalon sur Saône Cédex (FR)**

Courier Press, Leamington Spa, England.

**Description**

This invention relates to a capillary transport device useful with ion-selective electrodes, wherein liquid is transported through a capillary passage that is within the device.

U.S. Patent No. 4,271,119, issued June 2, 1981, describes a potentiometric test device comprising one or more pairs of ion-selective electrodes (ISE) and an ion bridge in liquid communication with the paired electrodes. The ion bridge features an internal capillary liquid transport passage formed by two opposed transport surfaces spaced apart a distance effective to induce capillary flow of liquid between the surfaces. Two access apertures are provided to allow both a patient sample and a reference liquid to be introduced into the bridge. Each of the liquids flows into contact with one-half of the paired electrodes on one side of the ion bridge, and into contact with the other liquid at a junction located in a portion of the passage between the two access apertures. This device has proven to be a highly effective device for assaying ionic analytes. There are, however, several aspects which have warranted further improvement.

First, the device is intended to be used by simultaneously metering the reference liquid and a patient's body liquid, e.g., serum, at each of the two access apertures, so that the two liquids simultaneously enter the bridge. On occasion, the simultaneous metering does not occur. Unless delay means are provided, such as the gating walls of the device of U.S. Patent 4,271,119, flow of one liquid within the bridge occasionally is so rapid (2 seconds or less to flow a distance of 1 cm) that it reaches the other access aperture before the second liquid is metered. Although these walls are effective in providing a delay, there are certain constructions of the bridge which do not readily lend themselves to the incorporation of such gating walls. A reduction in capillary spacing is known to provide a reduced flow rate, but such reduced spacings, as fixed dimensions formed by plastic parts, are disadvantageous because a) they provide only a gradual withdrawal of liquid from the access aperture and b) narrow spacings are difficult to manufacture within desired tolerances. A gradual withdrawal of the liquid deposited at the liquid access aperture introduces the possibility that, while it is occurring, a portion of the liquid will be splashed out of the access aperture if the test element is inadvertently jarred or bumped.

Second, under extreme conditions, it is possible that the surface tension of the patient sample will be markedly different from that of the reference liquid. If that is the case, it has been found that the liquid with the higher surface tension produces a driving force that can overcome the flow of the other liquid. In some instances the higher surface tension liquid pushes the lower surface tension liquid entirely out of the bridge, and up through the access aperture. This causes contamination of the electrode of the lower surface tension liquid, by the higher surface tension liquid.

According to the present invention, the problems of too rapid flow, or of displacement of the lower surface tension liquid by the higher surface tension liquid, are overcome by providing an improved liquid transport device for simultaneously transporting two different liquids within a capillary passage. The device comprises two opposed liquid transport surfaces spaced apart a distance effective to induce capillary flow between the surfaces of introduced liquid and to create the capillary passage, and access means, including two apertures, for respectively admitting the different liquids to the passage from the exterior of the device to two spaced-apart regions of the passage. The device is characterized in that there is disposed on at least a part of at least one of the surfaces, control means comprising a water-swellable composition or a composition being soluble in said liquid, the control means being arranged to a) increase the viscosity of the liquid while it is flowing past at least one surface, and b) at the same time maintain such flow continuous within the passage, whereby the rate of flow within said passage is reduced.

In preferred embodiments, the control means comprises a water-swellable composition disposed on the surface of the capillary passage.

It is an advantage that the device of the invention reduces the rate of liquid flow within it, so as to prevent one of the two liquids used therewith from flowing too fast, for example, so fast that it contaminates the electrode in an ISE test element that is intended for the other liquid.

It is a further advantage that the device prevents a higher surface tension liquid from pushing a lower surface tension liquid away from the normal junction area of the device.

It is a related advantage that the aforementioned advantages are achieved without the need for severe manufacturing tolerances in the dimensions of plastic parts.

Figure 1 is a plan view of a device constructed in accordance with the invention;

Figure 2 is a fragmentary section view taken generally along the line 2—2 of Figure 1;

Figure 3 is a fragmentary section view similar to that of Figure 2, except after the two liquids have met at the junction J; and

Figure 4 is a graph of the height of the capillary space above one useful swellable composition, versus the time of addition of the liquid to the layer.

The ionic analytes, commonly called electrolytes, are those present in any liquid, whether biological or industrial. The device of the invention works particularly well for biological liquids such as serum, urine and spinal fluid having surface tensions between 25 and 75 mN/m.

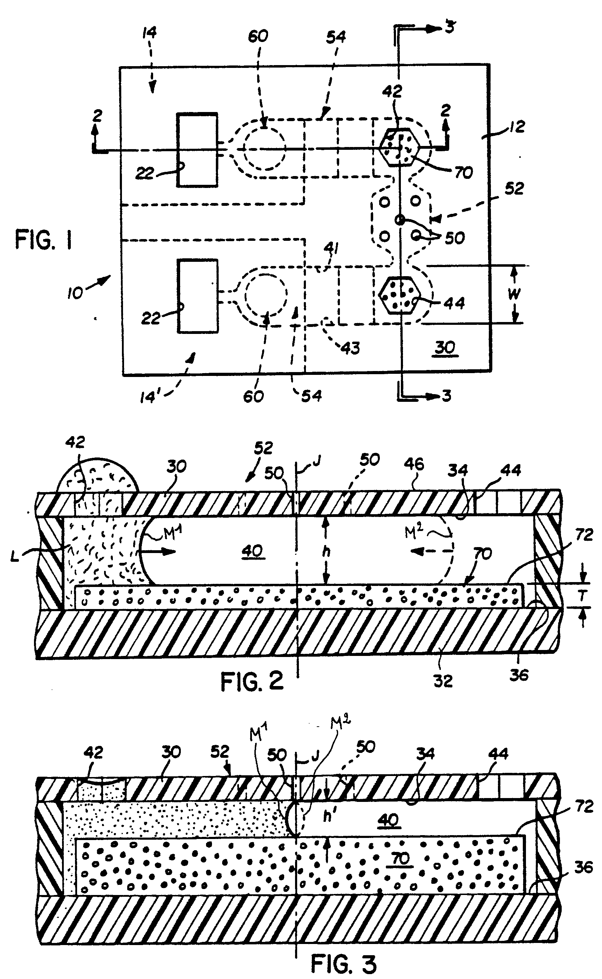

The device 10 shown in Figure 1 comprises an electrically insulative frame 12 which mounts a spaced-apart pair of preferably planar, solid ion-selective electrodes 14, 14' (hereinafter, "ISE's"). The ISE's are preferably adhered to exterior surface of device 10 by an adhesive. As described in U.S. Patent No. 4,053,381, issued on October 11, 1977, each ISE is a generally flat multilayered element comprising

2

adjacent layers. Each element contains an ion-selective membrane containing an ionophore and a solvent. When a drop of sample liquid or reference fluid makes contact with each element respectively, the ion of choice is carried by or otherwise effectively penetrates through the ion-selective layer of each element to the underlying layers. At these layers, an electrical potential is generated proportional to the activity of that particular ion. Any difference in these potentials due to two different ionic activities of the ion of choice in the two liquids (sample and reference) is registered as a difference potential on the electrometer. This reading then is converted into a measure of concentration of the ionic analyte.

Frame 12 is formed by a pair of members 30 and 32, Figure 2, having opposing internal surfaces 34 and 36, respectively, which comprise the transport surfaces for the liquids. Members 30 has an exterior surface 46. Surfaces 34 and 36 are spaced apart a distance effective to provide capillary flow of introduced liquid and to form a capillary transport passage 40, in the manner described in U.S. Patent No. 4,302,313. The capillary spacing providing the capillary flow is preferably no greater than 600 micrometers.

In addition to the opposing surfaces 34 and 36, passage 40 is further defined by sidewalls 41 and 43, Figure 1, past which the liquid flows. The flow-through width of passage 40 is measured between these sidewalls. Alternatively, an exposed edge will act as a flow-terminating means, as is described in U.S. Patent No. 4,254,083. Such an edge is obtainable by vertically slicing the device 10, Figure 1, along a plane coinciding with the plane of outer walls 43, to provide a flow-terminating means that defines flow-through width w.

To admit the two liquids into passage 40, access apertures 42 and 44, Figures 1—3, are formed in member 30. These apertures preferably have a shape that includes at least one corner to insure that a drop of liquid deposited by a metering device, not shown, on exterior surface 46, Figure 2, approximately at one of the apertures, will enter the aperture and thus passage 40. Most preferably, the apertures are shaped for this purpose in the manner described in U.S. Patent No. 4,254,083, issued March 3, 1981. As shown in Figure 1, a hexagon is a particularly useful flow-through shape for apertures 42 and 44.

Apertures 42 and 44 are further given a void volume that insures that the metered volume of liquid L, Figure 2, will contact both surface 34 and layer 70 to initiate capillary flow. Most preferably, the volume of liquid L is 10 µl.

To vent entrapped air from passage 40 as the two liquids move toward each other, one or more apertures 50, Figures 1 and 2, are formed in member 30, approximately centered between apertures 42 and 44. Apertures 50 are much smaller, e.g., 1 mm or less, than apertures 42 and 44 because they do not need the volume capability of the latter.

Thus, passage 40 transports the liquids toward each other in the portion 52, Figures 1 and 2, extending between apertures 42 and 44. When the liquids contact each other in the vicinity of apertures 50, they form an ionic connection, the first part of the ionic circuit needed for ion measurement by the electrometer. Thus, frame 12 functions as an ion bridge.

Passage portions 54 of passage 40 extend from bridge portion 52 to diverting apertures 60 which communicate with ISE's 14, thus giving to passage 40 a horseshoe shape.

For ease in manufacturing, and because of the control provided by the water-swellable composition hereinafter discussed, passage 40 is preferably free of fibers.

In accordance with the invention, Figures 1—3, there is provided in portion 52 of the device, means for increasing the viscosity of the liquid as it flows through portion 52 from access aperture 42 or 44. Viscosity is increased by any means which preferentially removes water from the liquid so that the ratio of water to high molecular weight materials or solids of the aqueous liquid decreases. Obviously, the means should not completely block the flow of the liquid within the capillary space. In the preferred embodiment wherein portion 52 is an ion bridge fluidly connecting two ISE's, the means is also inert to the two liquids that flow through portion 52. Such viscosity-increasing means reduces the liquid flow rate, and overcomes the tendency, when two liquids are present, of the liquid with the higher surface tension forcing the liquid with the lower surface tension out of portion 52.

Preferably, the viscosity-increasing means comprises a water-swellable composition placed in the form of a layer 70, or two layers (not shown) on one or both of the surfaces 34 and 36, preferably on surface 36. Most preferably, Figure 2, layer 70 extends a sufficient portion of the length of portion 52 between apertures 42 and 44 so as to underlie those apertures. A capillary spacing h, Figure 2, is provided between top surface 72 of layer 70, and opposing surface 34 of member 30. When flow is complete in portion 52, the capillary spacing is reduced to h', Figure 3. Because capillary spacing h is only gradually reduced during liquid flow through portion 52, there is ample volume initially to provide a more rapid withdrawal of liquid from access apertures 42 and 44 than would be the case if the capillary spacing were fixed at h'.

Useful examples of water-swellable compositions include 1) hardened and unhardened gelatin, 2) gelatin containing non-ionic surfactants, 3) water-swellable materials known to be substitutes for gelatin, such as gelatin derivatives, e.g., acetylated gelatin and phthalated gelatin, 4) starch, 5) polysaccharides such as dextran, 6) gum arabic, 7) agarose, 8) zein, 9) casein, 10) pectin, 11) collagen derivatives, 12) collodion, 13) agar-agar, 14) arrowroot, 15) cellulose derivatives such as those hardened by ethanol-free silicic acid as described in *Research Disclosure* Pub. 20431, published April, 1981, (*Research Disclosure* is published by Kenneth Mason Publications Limited, Emsworth; Hampshire P010 7DD; United Kingdom,) 16) high molecular weight polyvinyl alcohol or polyvinylpyrrolidone, 17) N-isopropylacrylamide, 18) water-swellable polymers and copolymers as described in U.S. Patent No. 4,203,442, e.g., poly(N-vinyl lactam),

**0 110 771**

and mixtures of the aforesaid materials. Gelatin is most preferred, and when used, any form is useful, for example, gelatin from ox hides, ox bones, and pig hides. Various non-ionic surfactants are useful in the gelatin, depending upon the flow rate that is desired. Useful examples of surfactants include nonylphenoxypolyglycidol surfactant available from Olin Manufacturing under the tradename "10G", and octylphenoxy polyethoxyethanol surfactants available from Rohm and Haas under the trade names "X-100" and "X-405". Preferably, the surfactant is present in an amount of from 0.05 weight % to 2.5 weight %. Most preferably, the amount of surfactant is from 0.08 weight % is 0.15 weight %, for example, 0.005 g/m².

Hardened gelatin is particularly useful as the control means. By varying the amount of hardener, the amount of swelling can be precisely controlled. In such embodiments conventional hardeners are useful, for example, bisvinylsulfonylmethyl ether, hereinafter "BVSME." The amount of hardener that is selected depends on which hardener is used, and how much swell is desired from the composition.

Alternatively, ionic surfactants are useful in the composition if the device is to be used other than in testing ionic analytes.

One advantage in using gel-like materials for layer 70 is that they are self-leveling. This insures that capillary spacing h and h' will be maintained without unduly restricting the manufacturing process by requiring severe manufacturing tolerances.

Useful water-swellable compositions also include the above-noted materials overcoated with other materials to form a second layer. Useful examples of overcoat materials include a) poly(n-isopropylacrylamide-co-acrylamide), and b) a beaded layer prepared as described in U.S. Patent No. 4,258,001. A useful example of such a beaded layer comprises beads of poly(vinyltoluene-co-p-t-butylstyrene-co-methacrylic acid) with or without an adhesive such as poly(n-butyl acrylate-co-styrene-co-2-acrylamide-2-methylpropane sulfonic acid) or poly(methylacrylate-co-2-acrylamido-2-methylpropane sulfonic acid-co-2-acetoacetoxyethyl methacrylate). Both of these materials a) and b) are useful to decrease the amount of swell that the composition would otherwise undergo. The beaded layer provides the further property of delaying the onset of swell. Such delay is useful in insuring that the liquid first rapidly enters passage 40, thereby reducing the risk that protruding liquid will spill out of access apertures 42 or 44.

Sponges are alternatively useful as the material of layer 70, if they have a known amount and rate of expansion when placed in contact with an aqueous liquid, and are provided with pore sizes that prevent absorption of the predominant solids (the cells, in the case of whole blood, and protein in the case of serum).

Useful control means for use in the device of the invention include materials that are not water-swellable compositions. For example, a coating can be used of compounds that rapidly dissolve in the liquid being transported during the time of flow required for the liquid to travel to the intended junction, provided the selected compound also gives sufficient increase in viscosity of the liquid as to reduce the rate of flow of the liquid. The preferred examples are non-ionic compounds for which dissolution of the amount of compound used is sufficiently rapid as to occur within less than 15 seconds, and preferably, 2 to 3 seconds. More specifically, a coating in an amount of at least 1.29 mg/cm² is sufficiently soluble in the liquid to be transported, if it dissolves in said 2 to 3 seconds. Compounds meeting this test include hydroxyethyl cellulose and hydroxypropyl cellulose having weight-average molecular weights of between 100,000 and 300,000.

An additional advantage of such water-soluble coatings is that they can provide enhanced wettability to the materials providing the capillary spacing, with or without the inclusion of conventional surfactants.

An advantage of the preferred water-swellable layer 70 of this invention is that it increases the viscosity without drawing into itself so much of the water of the liquid that air pockets form in the liquid flow through the spacing h or h'. That is, the increase in viscosity is achieved by the preferential absorption by layer 70 of water, compared to high molecular weight material and solids, at a rate of absorption equal to or less than the rate of swelling. Thus, the loss of water volume (by absorption) equals or is less than the loss of volume in the void of passage 40 due to the reduction of spacing h to h'. By such means, liquid flow is maintained continuous through this portion 52 of the passage, at a reduced rate. In contrast, if layer 70 were a rigid, porous matrix, such as a fibrous matrix, it would likely absorb both the water component of the liquid as well as the solids, depending on the pore size. As a result, the viscosity would not be increased because the liquid-to-solids ratio would not change.

The percent reduction in the effective capillary spacing that is available from the swelling of the layer 70 depends upon a number of factors. These include the kind of material, e.g., the kind of polymer selected, the thickness of layer 70, and the original effective capillary spacing prior to swelling. Preferably, these are selected such that, at the time when the menisci $M^1$ and $M^2$ of the two liquids meet at their junction, schematically indicated as a line J representing a plane transverse to portion 52, Figures 2 and 3, the original spacing h, Figure 2, will be reduced at least 25% to spacing h', Figure 3. If whole blood is the liquid being transported, most preferably the swelling will not reduce the spacing more than 50% within the time of the test (usually 3 minutes), so that h' will accommodate the cellular fraction.

If other liquids such as serum are being transported, the 50% reduction limit is not necessary. That is, a final reduction in h greater than 50% but less than 100% is also useful for liquids such as serum. Capillary spacing h' must not be completely eliminated, as otherwise errors in the potentiometric readings tend to

4

occur, presumably because the flow of ions necessary to the potentiometric measurement for the ISE test is hindered by the swollen composition.

One method of determining whether the viscosity has been increased sufficiently comprises the steps of adding, via apertures 42 and 44, two liquids having a difference in surface tensions of 4 mN/m. Enough is added to fill bridge portion 52. After a time of three minutes, if the junction J has not moved, the increase in viscosity is adequate, at least in positioning the junction for liquids having this much difference in surface tensions. (To render easier the observation of the junction, a small amount of dye can be added to either liquid.)

With regard to the water-swellable compositions described above, an adequate increase in viscosity is obtained by causing a reduction in capillary spacing h that is between 35% and 50% by the time the junction (line J) is reached. Such a reduction in capillary spacing insures that the increase in liquid viscosity resulting from absorption of water into layer 70, provides sufficient resistance against any significant displacement of the junction between the liquids during the time of the test (3 minutes). As noted above, it is believed the swelling achieves this result by removing water from the sample, thereby increasing the percent concentration of high molecular weight material and solids, and therefore viscosity. The increased viscosity in turn resists the displacement force causing the unwanted displacement of one liquid by the other.

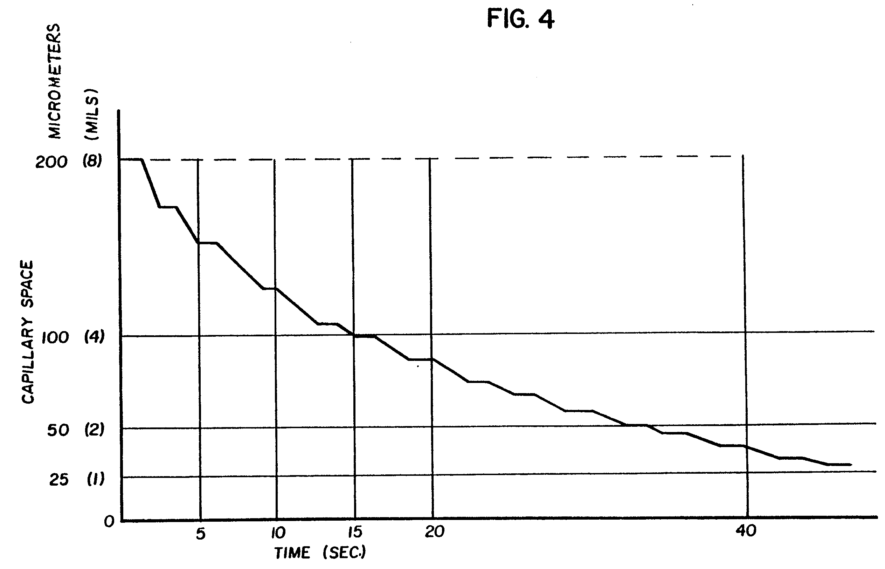

Figure 4 is a plot of the swelling characteristics of a bridge constructed as described above, when tested with water at a pH of 7.0. As shown, initial capillary spacing h between layer 70 and top surface 34 is 200 micrometers, for a layer 70 having an initial thickness of 18 micrometers and a composition of unhardened deionized gelatin containing Olin 10G® surfactant in an amount of 0.01 g/m². For such a bridge, swelling proceeds over time as shown, using water as the liquid. From curve 10 on this graph, it is apparent that, when the time of contact reaches 15 seconds, spacing h is reduced by 100 micrometers to 100 micrometers, a 50% reduction. From this graph the effect of other initial spacings h can be deduced by preparing a tracing of the curve as an overlay and moving the portion of the tracing at time=0 to the desired initial capillary spacing. For example, if the initial spacing h is 400 micrometers, in 15 seconds the composition swelling reduces that value 25% to 300 micrometers. At the end of three minutes, such composition will have reduced the 400 micrometers initial spacing to a little over 200 micrometers, or a reduction that does not exceed 50%.

The following Table I sets forth the swelling ability as a "final" swell%, of other water-swellable compositions, in the presence of water only, that is, after three minutes. The % is calculated as follows: (Final composition thickness–original composition thickness)÷original composition thickness.

TABLE I

| Sample | Material | % Swell |
|--------|----------|---------|
| A | Gelatin of Figure 4, to which has been added 2 wt % hardener (BVSME) | 173 |
| B | Gelatin of Figure 4, to which has been added 3 wt % hardener (BVSME) | 67 |
| C | Gelatin of Figure 4, except that the same surfactant was used in an amount of 1.0 g/m², rather than 0.01 g/m² | 303 |
| D | Gelatin of Figure 4, followed by an overcoat of poly(n-isopropylacrylamide-co-acrylamide) in an amount of 1.0 g/m² | 246 |

The "% swell" figures of Table I will vary as the pH, ionic strength, and percent proteins of the aqueous liquid varies, as is well known. For example, as the percent of proteins in the liquid increases, the amount of swelling caused by the liquid decreases. The factors of pH, ionic strength and % protein may also affect the rate of swelling, but to a lesser extent.

As will be readily apparent, the initial thickness t of layer 70, as well as its composition, are selected to be commensurate with the initial spacing h and the amount of reduction of h that is desired from such swelling.

Alternatively, and in accord with another embodiment of the invention, the thickness of the initial capillary spacing and of the swellable composition, and the material of the composition, are selected to control the rate of flow of the liquid within bridge portion 52. Specifically, the swell rate is selected so that the liquid flows half the distance between apertures 42 and 44 (i.e., to the line J) in a time of from 2 seconds to 15 seconds. It is this reduced flow rate that tends to insure that the first liquid will not race the full length of portion 52 before the second liquid is deposited into the other aperture.

The reduction in the half-distance flow rate is conveniently combinable with a 50% reduction in the capillary spacing by the time the junction, located generally at J, is reached. In Figure 4, the 50% reduction point is reached at 100 micrometers, or 15 seconds. If the flow time to the 50% reduction is desired to be only 12 seconds, then the initial spacing h should be reduced to 170 micrometers, as 85 micrometers will remain after 12 seconds, using the same swelling profile.

Various materials are useful as member 30, opposite layer 70. For example, polystyrene, cellulose acetate butyrate and cellulose triacetate available from Eastman Kodak Co. under the trademark "Kodacel", are useful.

Referring again to Figure 1, arm portions 54 of passage 40 are preferably constructed, as described in EP—A2—90636, filed 29 March 1983, priority: 29 March 1982, published 5 October 1983, to permit apertures 60 to be circular in shape.

It is desirable in some preferred embodiments that the arm portions of the bridge be modified to include a water-swellable composition as a means of positively forcing the liquid into the diverting aperture 60. In other words, the passage portions in the bridge connecting the electrodes provide liquid connection with the electrode. The passage portions include means defining a diverting aperture terminated by one of the electrodes. The control means is disposed on at least a part of the surface that is opposite the diverting aperture. Such a positioning of the control means acts to drive the liquid towards the respective electrode when the passage is contacted with the aqueous liquid.

Examples

The following Examples further illustrate the invention.

In each of the following examples, a bridge similar to the bridge portion 52, Figure 2, was simulated by applying a layer of water-swellable composition onto a support, using the thicknesses T noted in Table II, and laminating to that layered support, enough double-sided adhesive tapes to build up the desired capillary spacing, except for Example 2. In Example 2, a shim of plastic having a 25 micrometers thickness was physically held in place by downwardly applied pressure, without the use of adhesive. The covering member in all cases was 100 micrometer-thick cellulose triacetate, provided with a circular access aperture of a diameter of 3 mm. The test was conducted by applying more than enough human serum to the access aperture to provide flow within the passage for the time t'. The times t' were estimated based upon the swell profile curves, similar to Figure 4, that were obtained for each of the compositions. The serum had a surface tension of between 35 and 45 mN/m. Two replicates were run for each sample, except for Examples 2 and 3. Final swollen thicknesses were determined, based upon the swell percentages noted in Table I, assuming a "final" test time of 3 minutes. Variances in distances traveled for time t' were mostly due to variances in the horizontal width of the capillary spacing—i.e., the width varied from 2.54 mm to 3.8 mm, from replicate to replicate.

## TABLE II

| Ex. No. | Nature of swellable composition | Initial composition thickness (T, Fig. 2) | Initial capillary spacing (h, Fig. 2) | Time t' to reduce h by 50% | Distance serum traveled in time t' | | Average | Final swollen thickness of composition |
|---|---|---|---|---|---|---|---|---|
| | | | | | 1st Rep. | 2nd Rep. | | |
| 1 | Gelatin evaluated in Fig. 4 | 17.8µm | ≃200µm | ≃15sec | 5.85cm* | 5.46cm* | 5.65cm | ≃195µm |
| 2 | A of Table I | 14.0µm | ≃25µm | ≃ 7sec | 2.54cm | not measured | 2.54cm | ≃38µm** |
| 3 | B of Table I | 10.2µm | ≃25µm | ≃ 7sec | not measured | | | ≃17µm |
| 4 | C of Table I | 15.7µm | ≃50µm | ≃10sec . | 3.05cm | 2.41cm | 2.73cm | ≃63µm |
| 5 | D of Table I | 12.7µm | ≃50µm | ≃15sec | 3.18cm | 3.56cm | 3.37cm | ≃44µm |

*In these replicates, flow actually stopped before time t' had elapsed. However, because serum thereafter could be withdrawn from the capillary passage with a cotton swab, it was clear that swelling had not eliminated the capillary spacing to cause the stoppage.

**This is possible because the total distance available for swelling was T+h, here equal to 39µm.

As will be readily apparent, the half-distance of a bridge prepared as in Example 1 should be 5.65 cm, so that the total distance between apertures 42 and 44 would be 11.3 cm. For Examples 2, 4 and 5, the total distance between the two access apertures should be, respectively, 5.1 cm, 5.5 cm and 6.7 cm, in order that the half-distance flow times will be the indicated times t' (between 2 and 15 sec). Such total distances can be reduced, particularly for Example 5, and still produce a half-distance flow rate that is between 2 and 15 sec.

**Claims**

1. A liquid transport device for simultaneously transporting two different aqueous liquids within a capillary passage (40), said device comprising two opposed liquid transport surfaces (34, 36) spaced apart a distance effective to induce capillary flow between said surfaces of introduced liquid (L) and to create the capillary passage;
and access means, including two apertures (42, 44), for respectively admitting said different liquids to said passage from the exterior of the device to two spaced-apart regions of the passage; characterized in that there is disposed on at least one of said surfaces, spaced a capillary distance from the other surface, control means (70) comprising a water-swellable composition or a composition being soluble in said liquid, the control means being arranged to a) increase the viscosity of the liquid while it is flowing past said at least one surface, and b) at the same time maintain such flow continuous within said passage whereby the rate of flow within said passage is reduced.

2. A device as defined in claim 1, wherein said composition is water-swellable, by an amount and at a rate such that the liquid introduced at one region travels one-half the distance between said regions in a time of from 2 seconds to 15 seconds.

3. A device as defined in claim 2 wherein said passage (40) between said apertures (42, 44) has a predetermined length and is constructed to bring said two liquids together at a junction, said water-swellable composition being water-swellable by an amount and at a predetermined rate such that said initial capillary spacing is reduced by at least 25% by the time liquid introduced into one of said apertures flows to said junction.

4. A device as defined in claim 1 or claim 2 and 3, wherein said composition comprises a material selected from the group consisting of gelatin, a gelatin derivative, starch, polysaccharide, hydrogel, gum arabic, agarose, zein, casein, pectin, a derivative of collagen, collodion, agar-agar, arrowroot, polyvinyl alcohol, polyvinyl pyrrolidone, a cellulose derivative and a mixture of any of said materials.

5. A device comprising a pair of ion-selective electrodes connected by an ion bridge which is a device as defined in any previous claim.

6. A device as defined in claim 5, having passage portions (54) providing liquid communication with said electrodes (14) and (14') and including means in said surfaces defining a diverting aperture (60) terminated by one of said electrodes, said control means (70) being disposed on at least that part of one of said surfaces that is opposite to said diverting aperture.

**Patentansprüche**

1. Flüssigkeitstransportvorrichtung zum gleichzeitigen Transport zweier unterschiedlicher wässriger Flüssigkeiten in einer kapillaren Strömungsbahn (40), mit zwei einander gegenüberliegenden Flüssigkeits-Transportflächen (34, 36), die in einem solchen Abstand voneinander angeordnet sind, daß zwischen ihnen eine Kapillarströmung der in die Vorrichtung eingeführten Flüssigkeit (L) bewirkt und die kapillare Strömungsbahn gebildet wird, sowie mit Einlaßmitteln, zu denen zwei Öffnungen (42, 44) gehören, durch die jeweils eine der beiden unterschiedlichen Flüssigkeiten von der Außenseite der Vorrichtung her in zwei im Abstand voneinander liegende Bereiche der Strömungsbahn einführbar sind, dadurch gekennzeichnet, daß auf mindestens einer der Transportflächen in einem kapillaren Abstand von der anderen Transportfläche Steuermittel (70) angeordnet sind, die ein mit Wasser aufquellbares Material oder ein in der Flüssigkeit lösbares Material aufweisen und die so angeordnet sind, daß sie (a) die Viskosität der Flüssigkeit erhöhen, während diese an mindestens der einen der Transportflächen vorbeiströmt, und (b) gleichzeitig diese Strömung in der Strömungsbahn kontinuierlich aufrechterhalten, wodurch die Strömungsgeschwindigkeit innerhalb der Strömungsbahn vermindert ist.

2. Vorrichtung nach Anspruch 1, dadurch gekennzeichnet, daß das Material mit Wasser in einen solchen Maße und in einer solchen Geschwindigkeit aufquellbar ist, daß die in einen der Bereiche eingeführte Flüssigkeit die Hälfte der Strecke zwischen den Bereichen in einer Zeit von 2 bis 15 Sekunden zurücklegt.

3. Vorrichtung nach Anspruch 2, dadurch gekennzeichnet, daß die Strömungsbahn (40) zwischen den Öffnungen (42, 44) eine vorbestimmte Länge besitzt und so ausgebildet ist, daß die beiden Flüssigkeiten an einem Berührungspunkt aufeinandertreffen, wobei das mit Wasser aufquellbare Material in einem solchen Maße mit einer vorbestimmten Geschwindigkeit mit Wasser aufquellbar ist, daß der anfängliche vorhandene Kapillarabstand um mindestens 25% verringert ist, wenn die in eine der Öffnungen eingeführte Flüssigkeit zu dem Berührungspunkt strömt.

4. Vorrichtung nach Anspruch 1 oder den Ansprüchen 2 und 3, dadurch gekennzeichnet, daß das Material aus Gelatine, einem Gelatinederivat, Stärke, Polysaccharid, Hydrogel, Gummi arabicum, Agarose, Zein, Casein, Pektin, einem Kollagenderivat, Kollodium, Agar-Agar, Arrowroot, Polyvinylalkohol, Polyvinylpyrrolidon, einem Zellulosederivat oder einer Mischung aus mehreren dieser Stoffe besteht.

5. Vorrichtung gemäß einem der vorhergehenden Ansprüche, mit zwei ionenselektiven Elektroden, die über eine Ionenbrücke miteinander verbunden sind.

6. Vorrichtung nach Anspruch 5, dadurch gekennzeichnet, daß sie Strömungsbahnabschnitte (54) besitzt, die eine Flüssigkeitsverbindung mit den Elektroden (14) und (14') herstellen, und daß sie in den Transportoberflächen Mittel aufweist, die eine Umlenköffnung (60 bilden, die mit einer der Elektroden abschließt, wobei die Steuermittel (70) mindestens auf dem Teil einer der Transportoberflächen vorgesehen sind, der der Umlenköffnung gegenüberliegt.

**Revendications**

1. Dispositif de transport de liquide pour transporter simultanément deux liquides aqueux différents le long d'un passage capillaire (40), dispositif comprenant deux surfaces opposées (34, 36) de transport de liquides espacées l'une de l'autre d'une distance effective de manière à induire un écoulement par capillarité entre lesdites surfaces par laquelle on introduit le liquide (L) et à délimiter ledit passage capillaire; et des moyens d'accès, comprenant deux ouvertures (42, 44) pour introduire respectivement les deux liquides différents dans le passage à écoulement capillaire à partir de l'extérieur du dispositif vers deux zones distantes dudit passage' capillaire; caractérisé en ce que l'on dispose sur au moins l'une desdites surfaces, et à une distance de l'autre surface permettant un écoulement capillaire, un moyen de contrôle (70) comprenant soit une composition gonflant à l'eau soit une composition soluble dans ledit liquide, le moyen de contrôle étant agencé pour a) accroître la viscosité dudit liquide pendant qu'il s'écoule le long dudit moyen de contrôle et b) simultanément maintenir la continuité dudit flux à l'intérieur dudit passage capillaire et de ce fait diminuer la vitesse d'écoulement du liquide dans ce passage capillaire.

2. Dispositif conforme à la revendication 1, dans lequel la composition peut gonfler à l'eau d'une quantité et à une vitesse telles que la liquide introduit dans l'une des zones traverse la demi-distance séparant lesdites zones distantes en un temps compris entre 2 s. et 15 s.

3. Dispositif conforme à la revendication 2, dans lequel le passage (40) compris entre les ouvertures (42, 44) présente une longueur déterminée et est conçu de manière à amener les deux liquides en contact dans une zone de contact, la composition gonflant à l'eau étant susceptible de gonfler d'une quantité et à une vitesse telle que la dimension initiale du passage capillaire est réduite d'au moins 25% pendant le temps mis par le liquide introduit par l'une des ouvertures pour atteindre la zone de contact.

4. Dispositif conforme à l'une des revendications 1 à 3, dans lequel la composition comprend une substance choisie dans le groupe comprenant la gélatine, un dérivé de la gélatine, de l'amidon, un polysaccharide, le l'hydrogel, de la gomme arabique, de l'agarose, de la zéine, de la caséine, de la pectine, un dérivé de collagène, du collodion, de l'agar-agar, de l'arrowroot, de l'alcool polyvinylique, de la pyrrolidone polyvinylique, un dérivé de la cellulose, et un mélange quelconque desdites substances.

5. Dispositif comprenant une paire d'électrodes sélectives d'ions reliées entre elles par un pont ionique obtenu par le dispositif conforme à l'une quelconque des revendications précédentes.

6. Dispositif conforme à la revendication 5, comprenant des canaux (54) qui permettent la communication liquide avec les électrodes (14) et (14') et qui comprennent des moyens dans lesdites surfaces pour définir une ouverture (60) dont une extrémité est délimitée par lesdites électrodes, le moyen de contrôle (70) étant disposé sur au moins la région desdites surfaces qui est opposée à ladite ouverture (60).

FIG. 1

FIG. 2

FIG. 3

FIG. 4